# EUROPÄISCHE PATENTSCHRIFT

(11) **EP 2 598 861 B1**
(45) Veröffentlichungstag und Bekanntmachung des Hinweises auf die Patenterteilung: **10.06.2020**
(21) Anmeldenummer: 11760992.5
(22) Anmeldetag: 25.07.2011
(51) Int. Cl.: G01N 21/90

(54) **INSPEKTIONSVORRICHTUNG, FERTIGUNGSANLAGE MIT INSPEKTIONSVORRICHTUNG UND INSPEKTIONSVERFAHREN FÜR GEFÄßE**
INSPECTION APPARATUS, MANUFACTURING SYSTEM WITH INSPECTION APPARATUS AND INSPECTION METHOD FOR VESSELS
DISPOSITIF D'INSPECTION, INSTALLATION DE FABRICATION ÉQUIPÉE D'UN DISPOSITIF D'INSPECTION ET PROCÉDÉ D'INSPECTION DE RÉCIPIENTS

(30) Priorität: 27.07.2010 DE 102010032410
(43) Veröffentlichungstag der Anmeldung: 05.06.2013
(73) Patentinhaber: Mühlbauer GmbH & Co. KG, 93426 Roding (DE)
(72) Erfinder: SCHMIDT, Anton, 79872 Bernau im Schwarzwald (DE); FRIEDRICH, Michael, K., 5436 Würenlos (CH); ZIND, Oliver, 76229 Karlsruhe (DE)
(74) Vertreter: Schmidt, Steffen J.
(86) Internationale Anmeldenummer: PCT/EP2011/003716
(87) Internationale Veröffentlichungsnummer: WO 2012/019701

(56) Entgegenhaltungen:
- EP-A2- 1 826 556
- WO-A1-97/06429
- DE-A1- 10 312 051
- DE-C1- 19 726 967
- GB-A- 1 182 413
- JP-A- 8 152 417
- JP-A- 2009 150 767
- US-A- 5 912 776

## Beschreibung

Die vorliegende Erfindung betrifft eine Inspektionsvorrichtung, mit der Gefäße auf Schadhaftigkeiten untersucht werden können. Ferner bezieht sich die Erfindung auf eine Fertigungsanlage, mit der derartige Gefäße bearbeitet werden und die eine erfindungsgemäße Inspektionsvorrichtung enthält.

Schließlich umfasst die vorliegende Erfindung ein Inspektionsverfahren, mittels dessen Gefäße untersucht werden können.

Gefäße wie Dosen und Flaschen, die der Aufnahme von Lebensmitteln, Chemikalien, Medikamenten und anderem dienen, müssen vor ihrer Befüllung und Inverkehrbringung auf Schadstellen untersucht werden, um sicherzustellen, dass einerseits der Abfüllprozess störungsfrei abläuft und dass andererseits der Inhalt der Gefäße nicht verdirbt oder hinsichtlich seiner Qualität beeinträchtigt wird sowie ein Auslaufen der Flüssigkeiten sicher verhindert wird.

Vielfach werden Gefäße wie Dosen mittels bekannter Umformverfahren im Öffnungsbereich umgeformt, so dass am Flaschenhals eine Bördelung erreicht wird. Diese Bördelung ist insbesondere dafür geeignet, eine abdichtende Verschlussfolie oder ein anderes Verschlusselement daran zu befestigen, z. B. ein Ventil. Dazu ist es erforderlich, dass die Bördelung keine Schadstellen aufweist. Um bereits frühzeitig festzustellen, ob der Umformprozess Schäden an der Dose hinterlassen hat oder auch ob Flaschenhälse, die ebenfalls eine wulstartige Öffnungsverdickung haben, auf die beispielsweise Kronkorken aufgesetzt werden können, beschädigt sind, werden die Flaschen oder Dosen üblicher Weise unmittelbar nach Fertigstellung untersucht. Bekannte Fertigungsverfahren nutzen dabei Bildaufnahmetechnologien, mit denen es möglich ist, den empfindlichen Flaschen- oder Dosenhals mittels Bildaufnahmeverfahren frontal aufzunehmen. Bekanntermaßen werden dabei die Flaschen oder Dosen, wenn sie aus der vorangegangenen Bearbeitungsanlage kommen, aus der Anlage entlassen und in liegender Position an einer Kamera vorbeigeführt. Die Flaschen oder Dosen sind dabei nur über die Schwerkraft in einer schalenförmigen Aufnahme fixiert, so dass sie nur an der Auflagestelle mit geringer Genauigkeit positioniert und durchmesserabhängig in Bezug auf die Lage ihrer Längsachse auf dem sich bewegenden Förderband vorliegen, was nachteilig für hochauflösende Bildaufnahmen ist. Gerade kleinste Schädigungen wie etwa Kratzer in Lacken oder winzige Dellen im Bördelrand, die eine hohe Bildauflösung erfordern, können ausreichen, dass Flüssigkeiten aus dem nicht präzise verschlossenen Gefäß austreten, oder dass beispielsweise Sauerstoff in das Gefäß eintreten und den Inhalt etwa durch Oxidation nachteilig verändern kann.

Bekannte Bildaufnahmeverfahren zielen darauf ab, den Flaschenhals in Frontalaufnahmen darzustellen; Hinterschnitte, die sich durch Bördelränder oder durch Flaschenhalswulste ergeben, bewirken, dass Bereiche, die unterhalb der Flaschenöffnungsebene liegen, nicht oder nur unzureichend abgebildet und insofern nicht kontrolliert werden können.

GB 1 182 413 A offenbart eine Vorrichtung zur Inspektion einer Flasche von innen, wobei die Vorrichtung eine Kamera und eine Strahlungsquelle für nicht-sichtbare Strahlung (z. B. UV, IR) aufweist, die die Innenfläche der Flasche bestrahlt. Die Kamera soll von der nicht-sichtbaren Strahlung angeregte Fluoreszenzerscheinungen aufnehmen und so Defekte oder Verschmutzungen diagnostizieren. Das durch die Fluoreszenz erzeugte sichtbare Licht wird von einem Umlenkspiegel, der am Ende eines ausfahrbaren Schafts angebracht ist, zur ortsfesten Kamera geleitet. Eine gleichzeitige Aufnahme der Stirnfläche und der inneren bzw. äußeren Mantelfläche, geschweige denn eines Bördelrands mit Hinterschnitt ist nicht offenbart.

In der JP 8 152417 A wird auch eine Inspektionsvorrichtung zur Inneninspektion von Flaschen beschrieben. Dort wird ein zylindrischer Schaft der Inspektionsvorrichtung in den Flaschenhals eingeführt, wobei am Schaftende ein Spiegel angeordnet ist, und der Schaft zur Inspektion um seine Längsachse in der Flasche gedreht wird. Am Ende des Schafts, das sich außerhalb der Flasche befindet, ist eine Kamera angebracht, die das vom Spiegel umgelenkte Bild aus dem Flascheninneren aufnimmt. Beim Einführen des Schafts in den Flaschenhals wird die nicht ortsfest angeordnete Kamera mitbewegt. Es werden nur Ansichten vom Inneren der Flasche erzeugt; die Vorrichtung ist nicht geeignet, um einen Bördelrand mit Hinterschnitt abzubilden.

Aus EP 1 826 556 A2 ist eine Prüfeinrichtung für zylindrische Hohlkörper bekannt, die eine Kamera mit einem Objektiv und mit einer davor angeordneten Streulinse sowie einen in einer gemeinsamen Längsachse mit der Kamera und dem zylindrischen Hohlkörper angeordneten zylindrischen Umlenkspiegel aufweist. Der Strahlengang wird von dem Werkstück zur Kamera durch den Umlenkspiegel überkreuzt, sodass die Stirnfläche und die äußere und/oder die innere Mantelfläche betrachtet werden können. Hinterschnitte allerdings, wie sie bei einem zu untersuchenden Bördelrand auftreten, können so nicht erfasst werden.

JP 2009 150767 A beschreibt eine Inspektionsvorrichtung, mit der die Stirnfläche und die Innen-Mantelfläche eines Flaschenhalses mit einer Kamera inspiziert werden können. Die Kamera ist in Verlängerung der Längsachse des Flaschenhalses angeordnet. Zwischen Kamera und Flasche ist ein Ringspiegel angeordnet, der es ermöglicht die Innen-Mantelfläche des Flaschenhalses zu beurteilen, indem der Strahlengang zur Kamera durch den Ringspiegel überkreuzt wird. Über den Winkel des Ringspiegels kann die gewünschte Einblicktiefe eingestellt werden. Eine Abbildung der Untenseite eines Bördelrandes oder eines Hinterschnitt ist damit nicht möglich.

Ausgehend von diesem Stand der Technik ergibt sich das Erfordernis, eine verbesserte Inspektionsvorrichtung zur Untersuchung von Gefäßen bereitzustellen, die es ermöglicht, eine verbesserte Bildqualität zur Ermittlung von Schadhaftigkeiten an Gefäßen bereitzustellen. Diese Aufgabe wird mit der Inspektionsvorrichtung mit den Merkmalen des Anspruchs 1 gelöst.

Weiter ergibt sich das Erfordernis der Schaffung einer verbesserten Fertigungsanlage, mit der Gefäße gefertigt respektive bearbeitet werden können und die es erlaubt, Inline-Bilder mit verbesserter Aufnahmequalität von dem Gefäß aufzunehmen, wobei wünschenswert ist, nicht lediglich eine Draufsicht auf eine Gefäßhalsebene zu erfassen, sondern eine möglichst umfassende Abbildung zu erreichen. Diese Aufgabe wird mit der Fertigungsanlage mit den Merkmalen des Anspruchs 5 gelöst.

Weiter ergibt sich die Aufgabe, ein verbessertes Inspektionsverfahren zu schaffen, das es ermöglicht, die Gefäßqualität von Gefäßen unmittelbar in der Fertigung präzise und zuverlässig reproduzierbar auszuführen. Diese Aufgabe wird mit dem Inspektionsverfahren mit den Merkmalen des Anspruchs 8 gelöst.

Entsprechende Weiterbildungen der Vorrichtung und des Verfahrens sind in den jeweiligen Unteransprüchen ausgeführt.

Eine Ausführungsform einer erfindungsgemäßen Inspektionsvorrichtung dient der Untersuchung von Gefäßen, die fest an einer Bearbeitungsmaschine angeordnet sind.

Dabei wird unter "Gefäßen" nachfolgend eine Dose, die etwa mit einem Spray oder einer anderen Flüssigkeit befüllt werden kann und die dazu in einer Bearbeitungsmaschine wie einer Einziehmaschine umgeformt wird, verstanden. Solche Dosen werden vorwiegend aus Metall hergestellt. Es kann jedoch unter "Gefäß" auch eine Flasche, auch Glas- oder auch Kunststoffflaschen, sowie andere Gefäße wie Vasen und ähnliches verstanden werden.

Unter "Bearbeitung" kann insofern Umformen genauso wie Anbringen einer Oberflächenbeschichtung, Glätten der Oberfläche, oder, im Falle einer Glasbearbeitung etwa Beschleifen oder jede andere Art der Nachbearbeitung eines Rohlings oder eines Vorformlings, der zu dem Gefäß geformt werden soll, verstanden werden.

Die Inspektionsvorrichtung der vorliegenden Erfindung dient dazu, Schädigungen der Oberfläche derartiger Gefäße durch Bildaufnahme zu ermitteln; mit Schädigungen können dabei Kratzer in einer Lackbeschichtung, aber auch Dellen, ausgebrochene Materialpartikel, Risse oder Sprünge und weitere Schädigungen der Innen- und Außenseite des Gefäßes gemeint sein.

Die Inspektionsvorrichtung verfügt über ein Stativ, an dem eine Kamera, die mit einem optischen Bauelement, wie etwa einer oder mehreren Linsen, oder einem anderen geeigneten optischen Bauelement verbunden ist, befestigt ist. Derartige Kameras sind dem Fachmann bekannt. Die Kamera verfügt über eine herkömmliche Bildverarbeitungseinheit. Die Bildverarbeitungseinheit kann auf dem Fachmann bekannte Weise mit weiteren Daten verarbeitenden oder Bild verarbeitenden Einheiten verbunden sein, etwa um aufgenommene Bilder zu vergrößern, zu speichern oder um Abgleiche mit Datenverarbeitungseinheiten herzustellen, wobei auch eine Koppelung mit einer Datenbank umfasst sein kann, in der Vergleichsbilder idealer, respektive schädigungsfreier Gefäße hinterlegt sind, so dass bei Erfassung eines Schadens und nachfolgendem Bildabgleich unmittelbar Entfernen des schadhaften Gefäßes aus der Fertigungsanlage oder einer damit gekoppelten Abfördereinrichtung erreicht werden kann.

Die Kamera und eine zugeordnete Beleuchtungsvorrichtung werden von einer mit dem Stativ verbundenen Haltevorrichtung gehalten. Die Kamera definiert mit ihrem optischen Bauelement eine Bildaufnahmeachse, die in Richtung des zu inspizierenden Gefäßes weist, das sich dazu explizit in einer so genannten "Inspektionsposition" befindet: In dieser Position fluchtet die zentrale Längsachse des zu inspizierenden Gefäßes mit der Aufnahmeachse der Kamera.

Die Inspektionsvorrichtung weist ferner eine in Bezug zu dem Stativ verfahrbare, also mobile Komponente auf. Diese umfasst ein Halterohr, in dessen Inneren ein zweites optisches Bauelement angeordnet ist. Das Halterohr ist koaxial zu der Aufnahmeachse in einem Bereich zwischen der Kamera und dem Gefäß angeordnet und axial-parallel in Richtung des Gefäßes beweglich. Der Öffnungsquerschnitt des verfahrbaren Halterohrs ist größer als ein maximaler Außenumfang eines zu inspizierenden Abschnitts des Gefäßes. Während sich das zu inspizierende Gefäß in der Inspektionsposition befindet, wird die Inspektionsvorrichtung in eine Bildaufnahmeanordnung übergehen, wobei das Halterohr über das Gefäß verfahren wird, so dass zumindest der zu inspizierende Abschnitt des Gefäßes von dem Halterohr umgeben ist. Dabei verläuft der Strahlengang von der Beleuchtungsvorrichtung zu dem zu inspizierenden Abschnitt des Gefäßes und von dort über das zweite optische Bauelement zu dem ersten optischen Bauelement der Kamera.

Die Haltevorrichtung kann in einer Ausführungsform der Erfindung ein Mantelrohr aus einem Metall-, Metalllegierungs-, Kunststoff- oder Faserverbundmaterial sein, wobei die zentrale Längsachse des Mantelrohrs mit der Aufnahmeachse der Kamera und damit auch mit der zentralen Längsachse des Gefäßes in der Inspektionsposition fluchtet. Der Außenumfang des Mantelrohrs ist kleiner als der Öffnungsquerschnitt des Halterohrs, so dass das Halterohr, wenn es aus der Bildaufnahmeanordnung zurückgezogen wird, das Mantelrohr teilweise oder ganz umgibt. Dann kann ungehindert das nächste zu inspizierendes Gefäß die Inspektionsposition einnehmen.

Während das erste optische Bauelement, das mit der Kamera gekoppelt ist, üblicher Weise eine Linse oder eine Anordnung von Linsen sein wird, kann es sich bei dem zweiten optischen Bauelement um einen Spiegel, insbesondere um einen konkav gewölbten oder einen Parabolspiegel mit einer zentralen Durchtrittsöffnung handeln. Dieser in dem Halterohr angeordnete Spiegel ermöglicht vorteilhaft, dass das Gefäß vollständig umlaufend, also auch seine Seitenwandung, abgebildet werden kann. Der Spiegel hat eine Durchtrittsöffnung und wird bei der Bildaufnahme im gewünschten Maße mit der beweglichen Halterung über das Gefäß geschoben. Dabei ist seine Wölbung so angeordnet, dass die Optik der Kamera durch den Spiegel auch die Hinterschnitte und Wandungen aufnehmen kann.

Alternativ kann als weiteres optisches Bauelement eine Endoskop-Optik in dem Halterohr angeordnet sein, die durch eine Halterung in dem Halterohr parallel und zentriert in Bezug zur zentralen Längsachse des Halterohrs gehalten wird. Ein Ende der Endoskop-Optik weist zu der Kamera. Es ist nicht mit der Kamera verbunden, aber ein Aufnahmebereich der Kamera ist über das erste Bauelement, respektive die Linse, so auf die Stirnfläche an dem Ende der Endoskop-Optik eingestellt, dass eine Bildübertragung von der Endoskop-Optik auf die Kamera erfolgt. Das zweite Ende der Endoskopoptik ist in Richtung des in der Inspektionsposition befindlichen Gefäßes ausgerichtet, dessen Gefäßöffnung der Endoskop-Optik zugewandt ist, um so ein Eintauchen des zweiten Endes ins Innere des Gefäßes zu ermöglichen.

Vorteilhaft ist die vorliegende Inspektionsvorrichtung dazu geeignet, bereits inline in den Produktionsprozess eingebunden zu werden und am Ende der Bearbeitungslinie oder -straße mit dem Abschluss der letzten Bearbeitungsschritte an dem Gefäß Bildaufnahmen zu machen, während das Gefäß noch fest an der Bearbeitungsmaschine angeordnet ist. Damit wird erreicht, dass hoch auflösende, präzise Bilder gemacht werden können, die kleinste Schädigungen an den Gefäßen aufdecken. Eine Fertigungsanlage zur Fertigung von Gefäßen, die wenigstens eine Bearbeitungsmaschine zur Bearbeitung der Gefäße umfasst, weist daher eine sich bewegende Fördervorrichtung auf, die die Gefäße bewegt, die jedoch auf der Fördervorrichtung fest angeordnet sind. Die Gefäße passieren dabei, fest auf der Fördervorrichtung angeordnet, mehrere Bearbeitungsstationen in der Bearbeitungsmaschine, wie etwa Umformvorrichtungen, ohne dass die Gefäße umgesetzt werden müssen.

Weiter umfasst die erfindungsgemäße Fertigungsanlage eine Inspektionsvorrichtung, mit der die Gefäßqualität, wie obenstehend beschrieben, nach der Bearbeitung untersucht werden kann. Dabei ist unter "Gefäßqualität" gemeint, dass keine Schädigungen der Oberfläche vorliegen, wobei die Schädigungen von Rissen bis über Kratzer zu Materialausbrüchen und Dellen reichen können.

In der erfindungsgemäßen Fertigungsanlage ist die Inspektionsvorrichtung mittels eines Stativs so integriert, dass die Kamera mit entsprechender Bildverarbeitungsvorrichtung und mit der Kamera verbundenem optischen Bauelement auf geeignete Weise Bilder nicht nur von der Draufsicht des Gefäßhalses, sondern möglichst auch von hinter dem Hals liegenden Hinterschnitten, an Innen- oder Außenwandungsbereichen umfänglich anfertigen kann.

Sollen lediglich Bilder von dem Dosen- oder Flaschenhals, beziehungsweise der Öffnungsebene derselben genommen werden, so kann eine einfache Inspektionsvorrichtung, die eine Haltevorrichtung, vorzugsweise ein Mantelrohr aus Metall, umfasst, in der bzw. in dem die Kamera mit einer Beleuchtungsvorrichtung befestigt ist, verwendet werden. Der Strahlengang der Kamera und der Strahlengang der Beleuchtungsvorrichtung verlaufen entsprechend zu einer Bildaufnahmeöffnung des Metallrohrs, damit der austretende Lichtstrahl das zu untersuchende Objekt geschickt ausleuchten und die Kamera Aufnahmen anfertigen kann.

Erfindungsgemäß ist die Inspektionsvorrichtung in der Fertigungsanlage inline integriert, und kann sich ausgangs der Bearbeitungsmaschine befinden. Dies hat den Vorteil, dass die bearbeiteten Gefäße noch fest auf der Fördervorrichtung angeordnet sind und daher nicht wackeln, wenn Bilder angefertigt werden, um eine optimale Bildqualität zu erreichen.

Die Inspektionsvorrichtung, die die an dem Stativ befestigte Haltevorrichtung umfasst, in dem die Kamera mit dem ersten optischen Bauelement und der Beleuchtungsvorrichtung befestigt ist, ist in der Bearbeitungsmaschine in Bezug zu einem zu inspizierenden Gefäß, das sich in einer Inspektionsposition befindet, so angeordnet, dass die Kamera mit dem ersten optischen Bauelement entlang einer Aufnahmeachse in Richtung des zu inspizierenden Gefäßes weist und die Aufnahmeachse mit einer zentralen Längsachse des Gefäßes in der Inspektionsposition fluchtet.

Die Inspektionsvorrichtung kann vorteilhaft mit der Bearbeitungsmaschine über eine Steuervorrichtung gekoppelt sein, um die Inspektionsvorrichtung derart zu der Fördervorrichtung koordiniert anzusteuern, dass die Bildaufnahme zur Untersuchung der Gefäßqualität während einer Haltephase der Fördervorrichtung mit dem zu inspizierenden Gefäß in der Inspektionsposition erfolgt. Diese Haltephase ist durch eine Zeitdauer vorgegeben, die zur Bearbeitung eines Gefäßes durch die Bearbeitungsmaschine benötigt wird. Diese Haltephase ermöglicht zusammen mit der festen Anordnung der Gefäße an der Fördervorrichtung und der ortsfest angeordneten Kamera die optimale Bildqualität.

Ein an einer solchen Fertigungsanlage durchführbares Inspektionsverfahren zur Untersuchung einer Gefäßqualität nach dessen Bearbeitung umfasst folglich das Befestigen der Gefäße auf der bewegbaren Fördervorrichtung der Bearbeitungsmaschine, damit die Gefäße an mehreren Bearbeitungsstationen der Bearbeitungsmaschine bearbeitet werden können. Vorteilhaft erfolgt noch in der Bearbeitungsmaschine durch die Inspektionsvorrichtung das Untersuchen jeweils eines der Gefäße, das in der Inspektionsposition angeordnet ist, in der die zentrale Längsachse des Gefäßes mit der Aufnahmeachse der Kamera fluchtet. Zur Bildaufnahme des entsprechenden zu untersuchenden Gefäßes wird die Inspektionsvorrichtung durch die Steuervorrichtung koordiniert zu der Fördervorrichtung angesteuert, so dass die Inspektionsvorrichtung das in der Inspektionsposition befindliche Gefäß untersuchen kann, während die Fördervorrichtung anhält. Eine solche Haltephase ist durch die Bearbeitungszeitdauer der Gefäße in den Bearbeitungsstationen vorgegeben. Der längste Bearbeitungsschritt bestimmt die Dauer der Haltephase, die zumeist sehr kurz ist.

Um, wie vorbeschrieben, weiterreichende Aufnahmen anzufertigen und auch die Innenseite des Gefäßes oder seitliche Wandungsabschnitte und Hinterschnitte abzubilden, kann eine Inspektionsvorrichtung verwendet werden, die neben der statischen die verfahrbare Komponente aufweist.

Gemäß dieser Verfahrensführung wird die verfahrbare Bauteilkomponente der Inspektionsvorrichtung und damit das Halterohr mit dem zweiten optischen Bauelement axial-parallel zu der Aufnahmeachse in Richtung des zu inspizierenden Gefäßes in die Bildaufnahmeanordnung verfahren, so dass der zu inspizierende Abschnitt des Gefäßes in dem Halterohr liegt; das Halterohr kann aber auch über das gesamte Gefäß geführt werden.

Der Strahlengang verläuft entsprechend von der Beleuchtungsvorrichtung zu dem zu inspizierenden Abschnitt des Gefäßes und von dort über das zweite optische Bauelement zu dem ersten optischen Bauelement der Kamera.

Besonders vorteilhaft ist es, wenn die verfahrbare Komponente ein Halterohr ist, in dem entweder ein Spiegel, wie etwa ein Parabolspiegel, oder ein anderer konkav gewölbter Spiegel angeordnet ist, der über eine zentrale Durchtrittsöffnung verfügt und insofern über das Objekt geführt werden kann, von dem die Bildaufnahme angefertigt werden soll. Durch das Bewegen des Spiegels entlang des zu untersuchenden Gefäßes können problemlos Hinterschnitte aufgenommen werden, so dass nun das Gefäß durch die Kamera nicht nur in reiner Draufsicht erfasst werden kann, sondern über die Spiegeloptik im Halterohr indirekt auch in einer umfänglichen Seitenansicht. Zur Erfassung einer umfänglichen Innenansicht des Gefäßes kann vorteilhaft ein Halterohr mit Endoskop-Optik verwendet werden, die, während das Halterohr das zu inspizierende Gefäß aufnimmt, in das Innere der zu untersuchenden Dose oder der zu untersuchenden Flasche geführt werden kann, wobei es ermöglicht wird, nahezu jede geometrische Innenform zu untersuchen.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich schematische Darstellungen von Ausführungsbeispielen der Erfindung. Dabei zeigen:
**Fig. 1** eine Seitenansicht eines zu inspizierenden Gefäßes,
**Fig. 2** eine schematische Draufsicht auf eine Fertigungsanlage mit Bearbeitungsmaschine für die Gefäße, wobei das zu inspizierende Gefäß in Inspektionsposition indiziert ist,
**Fig. 3** eine schematische Seitenansicht auf eine erste Ausführungsform einer erfindungsgemäßen Inspektionsvorrichtung, mit der ein zu inspizierendes Gefäß in Inspektionsposition in der Bearbeitungsmaschine untersucht werden kann,
**Fig. 4** eine schematische Seitenansicht einer alternativen Ausführungsform der erfindungsgemäßen Inspektionsvorrichtung,
**Fig. 5** eine schematische Seitenansicht einer Inspektionsvorrichtung entsprechend der in Fig. 3, mit dem Strahlengang von dem zu inspizierenden Gefäßabschnitt über die Spiegel-Optik zur Kamera,
**Fig. 6** eine Seitenansicht eines weiteren, mit der erfindungsgemäßen Inspektionsanlage zu untersuchenden Gefäßes,
**Fig. 7** eine schematische Seitenansicht einer zweiten Ausführungsform einer Inspektionsvorrichtung, mit der ein innseitig zu inspizierendes Gefäß in Inspektionsposition in der Bearbeitungsmaschine untersucht werden kann.

Die Erfindung bezieht sich auf eine Inspektionsvorrichtung, mit der ein Gefäß, wie etwa eine Dose, am Ende der Produktion auf ihre Form und auf eventuelle Produktionsfehler hin überprüft werden kann. Diese Überprüfung erfolgt erfindungsgemäß inline in der laufenden Produktion, wobei jedes produzierte Gefäß, beziehungsweise jede Dose, überprüft wird.

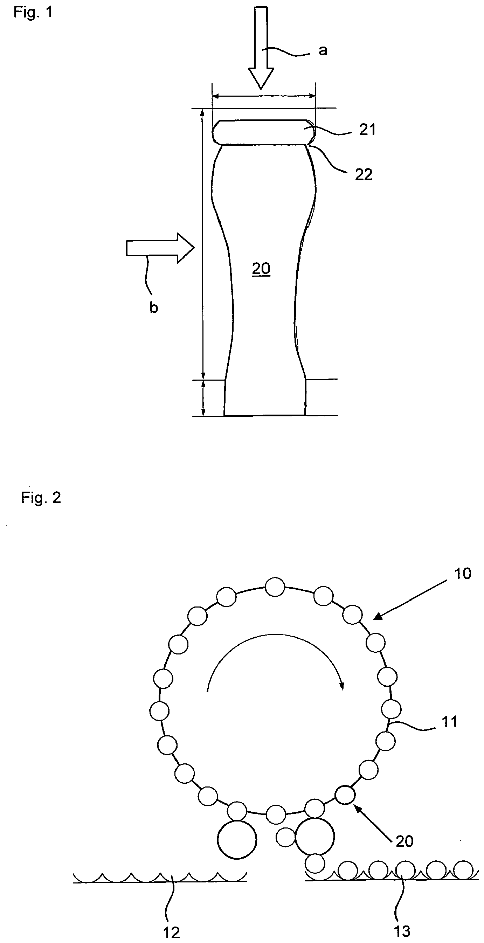

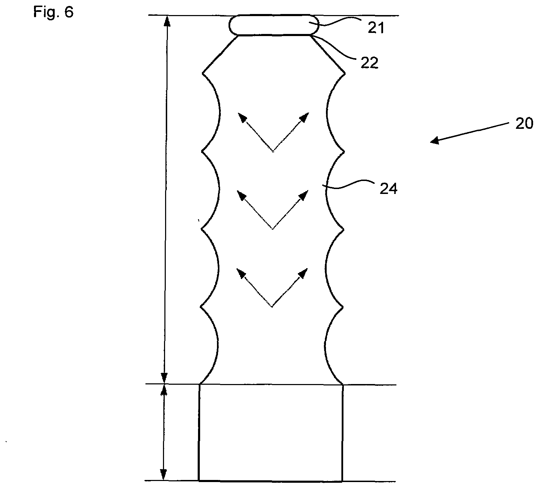

Unter Gefäß oder Dose wird vorliegend ein Behälter mit einer Längsausdehnung verstanden, der wie in **Fig. 1** **und** **6** gezeigt eine Kontur mit Kragen, Wölbungen und Einschnitte aufweisen kann. Die oben liegende Öffnung des Gefäßes 20 wird dort von einem Bördelrand 21 umgeben. Unterhalb des Bördelrands 21 schließt eine Einschnürung 22 an, so dass dieser Halsbereich des Gefäßes 20 bei einer Betrachtung von oben, wie Blockpfeil a andeutet, nicht erfassbar ist, da sich ein Hinterschnitt bildet. Auch die Einbauchung, siehe Pfeil b, entzieht sich bei Betrachtung von oben dem Blick.

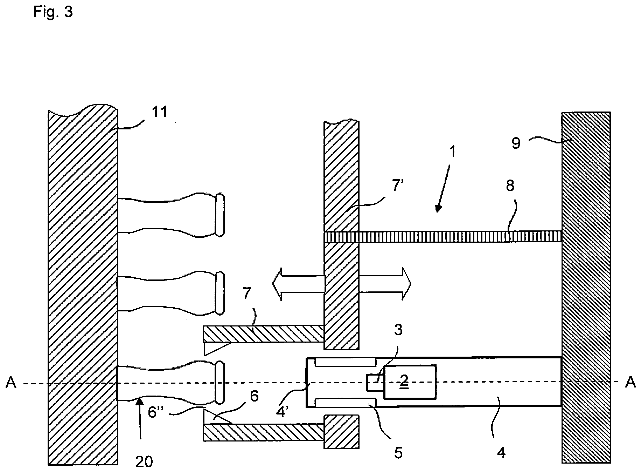

Um nun eine berührungsfreie Endkontrolle auf einer Bearbeitungsmaschine, wie etwa einer Einziehmaschine 10 in **Fig. 2****,** die von einer Zuführfördervorrichtung 12 mit zu bearbeitenden Dosen versorgt wird und die mit einem Abförderband 13 gekoppelt ist, das die Gefäße in Schalen abtransportiert, durchführen zu können, mittels der sowohl die äußere als auch innere Oberfläche des Gefäßes untersucht werden können, wird der Bearbeitungsmaschine 10, in der eine Vielzahl von Gefäßen fest an der Fördervorrichtung 11 angeordnet ist und durch diese bewegt wird, eine erfindungsgemäße Inspektionsvorrichtung an der Stelle in der Bearbeitungsmaschine 10 zugeordnet, die durch das zu inspizierende Gefäß 20 in der Inspektionsposition ausgangs der Bearbeitungsmaschine angezeigt wird. Die dazu geeignete erfindungsgemäße Inspektionsvorrichtung 1 ist in **Fig. 3****,** **4****,** **5** **und** **7** zu sehen ist.

Die Inspektionsvorrichtung 1 weist dabei ein Stativ 9 auf, an dem ein Mantelrohr 4 als Haltevorrichtung für die Kamera 2 und die Beleuchtungseinheiten 5 festgelegt ist. Das Mantelrohr 4 kann ein Metallrohr, z.B. ein Stahlrohr sein, es kann jedoch auch aus einem Kunststoff oder einem Faserverbundmaterial bestehen. Im Mantelrohr 4 finden die Kamera 2 mit einem dazugehörigen optischen Bauelement 3 sowie die Beleuchtungseinheiten 5 Aufnahme, wobei sich ein Aufnahmebereich der Kamera 2, beziehungsweise deren Strahlengang, auf einer von dem Stativ 9 abgewandten Öffnung 4' des Mantelrohrs 4 herauserstreckt. Wie in **Fig. 3** gezeigt ist, ist das Mantelrohr 4 samt Kamera 2 derart angeordnet, dass dessen Längs- beziehungsweise Bildaufnahmeachse eine gemeinsame Achse A-A mit der Längsachse des zu prüfenden Gefäßes 20 bildet, das von der Fördervorrichtung 11 der Bearbeitungsmaschine transportiert wird. Die Gefäße sind fest in der Fördervorrichtung 11 eingespannt, so dass das in der Inspektionsposition entsprechend der Aufnahmeachse A-A befindliche Gefäß 20 exakt im Erfassungsbereich der Kamera 2 positioniert werden kann.

Die Bewegung der Gefäße durch die Bearbeitungsmaschine mittels der Fördervorrichtung ist dabei nicht stetig, sondern erfolgt aufgrund der Bearbeitungszeitdauer eines Gefäßes schubweise, so dass sukzessive jedes Gefäß mit seiner Längsachse in der Aufnahmeachse A-A der Kamera 2 während der durch die Bearbeitung vorgegebenen Zeitdauer kurz zum Halten kommt, um dort überprüft zu werden. Die Inspektionsvorrichtung 1 wird so angesteuert, dass die Untersuchungssequenzen der Inspektionsvorrichtung 1 koordiniert mit dem Halterhythmus der Fördereinrichtung 11 ablaufen. Dazu können beide über eine nicht dargestellte Steuerungsvorrichtung gekoppelt sein. Mit der in dem Mantelrohr 4 angeordneten Kamera 2 alleine lässt sich lediglich die Topansicht auf das Gefäß 20 erfassen, beschattete Bereiche hinter Auswölbungen wie dem Bördelrand 21 können so nicht erfasst werden.

Um diese beschatteten Bereiche ebenfalls mit der Kamera 2 erfassen zu können, umfasst die erfindungsgemäße Inspektionsvorrichtung 1 ein parallel zur Längsachse des Mantelrohrs 4 verfahrbares Trägerelement 7', das, wie in **Fig. 3** gezeigt, auf einer Stange 8 laufen kann, die parallel zum Mantelrohr 4 angeordnet ist, das an dem Stativ 9 befestigt ist. Das Trägerelement 7' weist in dem Bereich, an dem das Halterohr 7 angefügt ist, eine Durchtrittsöffnung für das Mantelrohr 4 auf, die vorteilhafterweise derart ausgestattet ist, dass nahezu kein Fremdlichteinfall ins Innere des Halterohrs 7 eintritt, das Innenvolumen des Halterohrs 7 also überwiegend von den Beleuchtungseinheiten 5 ausgeleuchtet wird.

In dem Halterohr 7 ist ein rundum laufendes Spiegelelement 6 mit einer Durchtrittsöffnung 6" angeordnet, deren Durchmesser so groß ausgebildet ist, dass das Halterohr 7 mit dem Spiegelelement 6 auch über einen größten Querschnitt des zu prüfenden Gefäßes 20 verfahren werden kann. Das Spiegelelement 6 kann anders als dargestellt beispielsweise als Parabolspiegelelement gestaltet sein, wobei die Durchtrittsöffnung 6" mittig, zentriert zur Achse A-A angeordnet ist.

Das Halterohr mit dem darin angeordneten Spiegelelement, sowie das Mantelrohr und die Trägerelement-Durchtrittsöffnung müssen nicht zwingend kreisrunde Querschnitte aufweisen. Abhängig von einer Querschnittsform der zu inspizierenden Gefäße können Halterohre mit Spiegelelemente mit entsprechenden Querschnittsformen ausgewählt werden, und in äquivalenter Weise auch das Mantelrohr und die entsprechende Durchtrittsöffnung in dem Trägerelement angepasst werden.

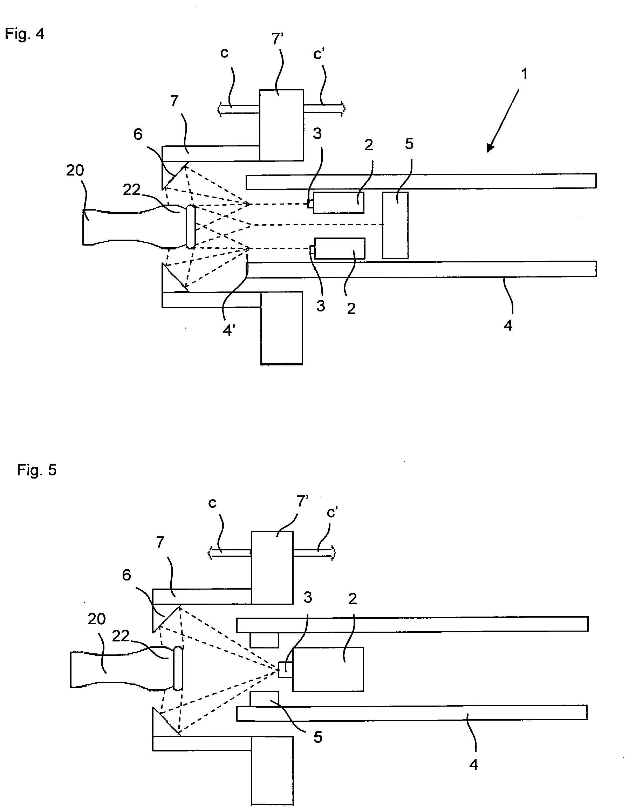

In **Fig. 5** ist das mit einer der in **Fig. 3** entsprechenden Inspektionsvorrichtung 1 inspizierte Gefäß 20 samt den durch das verfahrbare Spiegelelement 6 ermöglichten Strahlengängen skizziert. Das Verfahren des an dem Trägerelement 7' befestigten Halterohrs 7 für die Spiegel-Optik 6 ist durch die Blockpfeile c und c' angedeutet: Pfeil c symbolisiert die Bewegung in Richtung der Bildaufnahmeanordnung und Pfeil c' verdeutlicht das Zurückziehen, um ein nächstes zu inspizierendes Gefäß in die Inspektionsposition transportieren zu lassen. Die Strahlengänge verlaufen ausgehend von den Beleuchtungseinheiten 5 zu dem Gefäß 20 (nicht dargestellt) und dort von dem inspizierten hinterschnittenen Abschnitt 22 über den Spiegel 6 zur Linse 3 der Kamera 2. Auf diese Weise können sowohl Farbfehler als auch Defekte wie Löcher, darunter wären Risse zu verstehen, die das Material von außen nach innen durchdringen, oder so genannten Pinholes detektiert werden, unter denen vorliegend ein Materialfehler verstanden wird, der kleiner als ein Loch oder Riss ist, der jedoch in der weiteren Verarbeitung, etwa beim Befüllen des Gefäßes zu einem Materialversagen und zum Bruch des Gefäßes führen könnte.

In **Fig. 4** ist eine alternative Inspektionsvorrichtung 1 gezeigt, in der an Stelle einer Kamera zwei Kameras 2, dafür eine Beleuchtungseinheit 5 im Mantelrohr 4 angeordnet sind. Der in Bezug auf das spezielle Spiegelelement 6 verbesserte Erfassungsbereich der beiden Kameras 2 ermöglicht eine noch bessere Beurteilung der Verschattungsbereiche des Gefäßes 20, etwa für den Fall eines unsymmetrischen Gefäßes, bei dem sich die vom Gefäß reflektierten Strahlengänge nicht von einer einzigen Kamera fokussieren lassen. Der gestrichelt eingezeichnete Strahlengang ausgehend von der Beleuchtungseinheit 5 bis zu der Öffnung 4' des Mantelrohrs 4 deutet an, dass hier auch ein optisches Übertragungselement zum Einsatz kommen kann, etwa eine Faseroptik, so dass der Beleuchtungsbereich außerhalb des Mantelrohrs 4 liegt und so das Gefäß 20 und nicht das Mantelrohrinnere illuminiert wird. Für die von der Spiegel-Optik 6 reflektierten Lichtstrahlen kann ähnliches gelten, der Strahlengang wird an der Mantelrohrmündung 4' gebündelt und weiter an die Kameras 2 im Mantelrohr 4 übertragen. Zu diesem Zweck ist es denkbar, dass auch weitere optische Bauelemente zum Einsatz kommen können.

Das in **Fig. 6** gezeigte Gefäß 20 weist neben der Einschnürung 22 unterhalb des Bördelrands 21 im Querschnitt ein Wellenprofil mit vier Einbuchtungen 24 auf, die ebenfalls mit der erfindungsgemäßen Inspektionsvorrichtung untersucht werden können, indem das Spezialspiegelelement 6 bis hin zur untersten Einbuchtung verfahren wird und so eine Ansicht auf die seitlichen Bereiche des Gefäßes ermöglicht, die andernfalls mit der in Topview angeordneten Kamera nicht möglich wären.

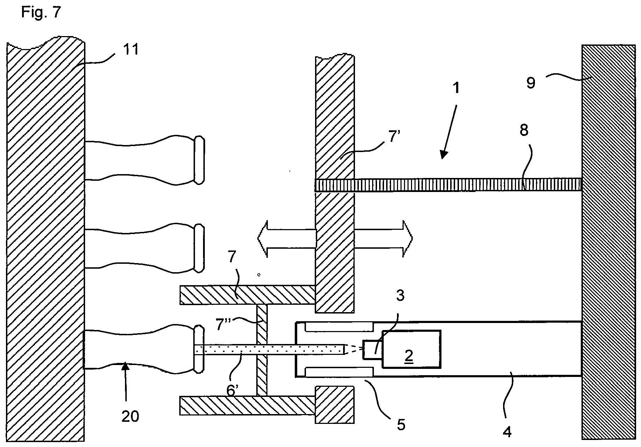

**Fig. 7** zeigt eine weitere Ausführungsform der erfindungsgemäßen Inspektionsvorrichtung 1, die alternativ oder zusätzlich zu der oben ausgeführten Inspektionsvorrichtung mit dem Spiegelelement 6 zur Erfassung der äußeren Oberfläche des Gefäßes 20 verwendet werden kann. Durch die Verwendung eines weiteren speziellen optischen Bauelements 6', hier einer Endoskop-Optik 6', kann auch die innere Oberfläche des Gefäßes 20 inspiziert werden. Während es bei der Untersuchung der äußeren Oberfläche nicht zwangsläufig erforderlich ist, dass eine Gefäßöffnung in Richtung der Kamera weist, obwohl dies in Abhängigkeit der Gefäßgestaltung - etwa bei einer sich an die Gefäßöffnung anschließenden Einschnürung wie einem Flaschenhals - häufig der Fall sein wird, wird zur Innenuntersuchung das Gefäß 20 in Inspektionsposition mit seiner Öffnung in Richtung der Inspektionsvorrichtung, respektive der Kamera angeordnet. In dem Halterohr 7 wird nun die Endoskop-Optik 6' mittels eines geeigneten, zentrierenden Halteelements 7" gehalten, welches die Endoskop-Optik 6', die eine optische Faser sein kann, entsprechend der Aufnahmeachse A-A, beziehungsweise der Mittelachse des Gefäßes 20 positioniert. Hierbei wird nun die Endoskop-Optik 6' über das mit dem Halterohr 7 verbundene Trägerelement 7' axial-parallel zu dem Mantelrohr 4 in Bezug auf das Stativ 9 über die Stange 8 bewegt, so dass die Endoskop-Optik 6' in das Gefäß 20 durch dessen Öffnung eingeführt wird, während das Halterohr 7 über das Gefäß 20 verfahren wird. Das nicht eingeführte Ende der Endoskop-Optik 6' liegt mit seiner Stirnfläche der Kamera 2 mit ihrer zugehörigen optischen Baugruppe 3 gegenüber, wobei sich durch das Verfahren der Endoskop-Optik 6' der Abstand zwischen deren Stirnfläche und der Kamera 2 während eines Prüfvorgangs kontinuierlich ändert. Die Kamera, beziehungsweise die optische Baugruppe 3, ist nun derart gestaltet, dass während des Prüfens die Stirnfläche der Endoskop-Optik 6' erfasst wird, wobei ein Aufnahmebereich der Kamera 2 einer sich bewegenden Stirnfläche angepasst werden kann. Es kann aber auch eine Endoskop-Optik verwendet werden, deren Länge erlaubt, dass das zu der Kamera 2 weisende Ende stationär gehalten wird, während das entgegengesetzte Ende in das Gefäßinnere verfahren wird. In diesem Fall genügt es, den Aufnahmebereich der Kamera einmalig auf die Stirnfläche der Endoskop-Optik zu fokussieren.

Die Integration einer solchen Inspektionsvorrichtung in die Fertigungsanlage 10 (siehe **Fig. 2**) mit der Fördervorrichtung 11 ermöglicht so eine schnelle, höchst präzise Untersuchung sowohl der Innen- als auch Außenfläche eines Gefäßes wie etwa einer Dose, so dass effektiv defekte oder verschmutzte Gefäße dem Weiterverarbeitungsprozess entzogen werden können. Zur Automatisierung dieser Vorgänge kann die Kamera zudem mit einer Bildverarbeitungseinheit gekoppelt sein, in der quasi ein Vollbild eines korrekt ausgeführten Gefäßes hinterlegt ist, so dass die Verarbeitungseinheit durch Vergleich des aufgenommenen mit dem hinterlegten Bild feststellen kann, ob das Prüflingsgefäß intakt ist oder einen Defekt oder eine Verschmutzung aufweist. Die erhöhte Genauigkeit der Untersuchung wurde dadurch erreicht, dass die Inspektion innerhalb der Fertigungsanlage in die Bearbeitungsmaschine integriert und nicht wie bislang am Bandende ausgeführt wird, wo die Gefäße nicht mehr derart fixiert sind, dass sie eine hochpräzise Positionierung gestatten.

**BEZUGSZEICHENLISTE**

| | |
|---|---|
| 1 | Inspektionsvorrichtung |
| 2 | Kamera |
| 3 | optisches Bauelement |
| 4 | Mantelrohr |
| 4' | Mantelrohröffnung |
| 5 | Beleuchtungsvorrichtung |
| 6 | Optisches Bauelement /Spiegelelement |
| 6' | Optisches Bauelement/Endoskop-Optik |
| 6" | Durchtrittsöffnung |
| 7 | Halterohr |
| 7' | Trägerelement |
| 8 | Stange |
| 9 | Stativ |
| 10 | Fertigungsanlage |
| 11 | Bearbeitungsmaschine/Fördervorrichtung |
| 12 | Zuführförderband |
| 13 | Abförderband |
| 20 | Gefäß |
| 21 | Bördelrand |
| 22 | Einschnürung |
| 24 | Einbuchtung |

## Patentansprüche

1. Inspektionsvorrichtung (1) zur Untersuchung von an einer Bearbeitungsmaschine (10) fest angeordneten Gefäßen, die eine Kamera (2), die ein erstes optisches Bauelement (3) aufweist und mit einer Bildverarbeitungseinheit gekoppelt ist und die in Bezug auf ein zu inspizierendes Gefäß (20) angeordnet ist, das in einer Inspektionsposition an der Bearbeitungsmaschine (10) vorliegt, umfasst,
wobei die Inspektionsvorrichtung (1) ein zweites, beweglich gelagertes Optikelement (6,6') aufweist,
und wobei das erste Optikelement (3) und das zweite Optikelement (6,6') mit der Kamera (2) zur Bildaufnahme von zumindest einer Ansicht in Richtung einer Gefäßöffnung und zumindest einer Ansicht in Richtung einer von der Gefäßöffnung abgewandten Seite des zu inspizierenden Gefäßes (20) in operativer Verbindung stehen,
wobei das zweite, beweglich gelagerte Optikelement (6,6') in einem verfahrbaren Bauteil angeordnet ist, das zumindest ein Halterohr (7) umfasst, wobei
- die Kamera (2) ortsfest in Bezug auf das zu inspizierende Gefäß (20) angeordnet ist,
**dadurch gekennzeichnet, dass**
- die Kamera (2) mit zumindest einer Beleuchtungsvorrichtung (5) von einem Mantelrohr (4) umfasst ist, wobei das Mantelrohr (4) eine zentrale Längsachse hat, und ein Außendurchmesser des Mantelrohrs (4) kleiner ist als ein Öffnungsquerschnitt des Halterohrs (7), so dass das Mantelrohr (4) in dem Halterohr (7) zumindest teilweise aufnehmbar ist, und
- das Bauteil, in dem das zweite Optikelement (6, 6') angeordnet ist, gegenüber der ortsfesten Kamera (2) parallel zur Längsachse des Mantelrohrs (4) verfahrbar ist.

2. Inspektionsvorrichtung (1) nach Anspruch 1, wobei das Mantelrohr (4) aus einem Metall-, Metalllegierungs-, Kunststoff- oder Faserverbundmaterial beschaffen ist.

3. Inspektionsvorrichtung (1) nach einem der vorhergehenden Ansprüche,
wobei die Kamera (2) mit dem ersten optischen Bauelement (3) entlang einer Aufnahmeachse (A-A) in Richtung des Gefäßes (20) weist, das sich in der Inspektionsposition befindet, wobei in der Inspektionsposition die Aufnahmeachse (A-A) mit einer zentralen Längsachse des zu inspizierenden Gefäßes (20) fluchtet, und wobei das Halterohr (7) koaxial zu der Aufnahmeachse (A-A) in einem Bereich zwischen der Kamera (2) und dem Gefäß (20) angeordnet und axialparallel in Richtung des Gefäßes (20) beweglich ist und der Öffnungsquerschnitt des Halterohrs (7) größer ist als ein maximaler Außendurchmesser eines zu inspizierenden Abschnitts des Gefäßes (20), so dass in einer Bildaufnahmeanordnung zumindest der zu inspizierende Abschnitt des Gefäßes (20) in dem Halterohr (7) aufnehmbar ist und zur Bereitstellung der operativen Verbindung zwischen dem zweiten Optikelement (6, 6') und der Kamera ein Strahlengang von der Beleuchtungsvorrichtung (5) zu dem zu inspizierenden Abschnitt des Gefäßes (20) und von dort über das zweite optische Bauelement (6, 6') zu dem ersten optischen Bauelement (3) der Kamera (2) verläuft.

4. Inspektionsvorrichtung (1) nach zumindest einem der Ansprüche 1 bis 3, wobei das zweite optische Bauelement
- ein Spiegel (6), insbesondere ein konkav gewölbter oder ein Parabolspiegel, mit einer Durchtrittsöffnung (6") und/oder
- eine Endoskopoptik (6'),
ist,
wobei die Endoskopoptik (6') durch eine Halterung (7") in dem Halterohr (7) parallel und zentriert zu einer zentralen Längsachse des Halterohrs (7) gehalten wird und ein erstes Ende der Endoskopoptik (6') zu der Kamera (2) weist, und ein Aufnahmebereich der Kamera (2) mittels des ersten optischen Bauelements (3) auf eine Stirnfläche an dem ersten Ende der Endoskopoptik (6') einstellbar ist und wobei das in der Inspektionsposition befindliche Gefäß mit seiner Gefäßöffnung zu einem zweiten Ende der Endoskopoptik (6') weist.

5. Fertigungsanlage zur Fertigung von Gefäßen, umfassend zumindest eine Bearbeitungsmaschine (10) zur Bearbeitung der Gefäße, die in der Bearbeitungsmaschine (10) auf einer sich bewegenden Fördervorrichtung (11) zum Bewegen der Gefäße entlang mehrerer Bearbeitungsstationen der Bearbeitungsmaschine (10) fest angeordnet sind, und eine Inspektionsvorrichtung nach zumindest einem der Ansprüche 1 bis 4, zur Untersuchung einer Gefäßqualität nach der Bearbeitung.

6. Fertigungsanlage nach Anspruch 5, wobei die Inspektionsvorrichtung die zweite Haltevorrichtung (4) umfasst, in der die Kamera (2) mit dem ersten optischen Bauelement (3) und der zumindest einen Beleuchtungsvorrichtung (5) befestigt ist, und in der Bearbeitungsmaschine (10) in Bezug zu einem zu inspizierenden Gefäß (20), das sich in einer Inspektionsposition befindet, so positioniert ist, dass die Kamera (2) mit dem ersten optischen Bauelement (3) entlang der Aufnahmeachse (A-A) in Richtung des zu inspizierenden Gefäßes (20) weist, wobei die Aufnahmeachse (A-A) mit einer zentrale Längsachse des Gefäßes (20) in der Inspektionsposition fluchtet, wobei die Inspektionsvorrichtung mit der Bearbeitungsmaschine (10) zur koordinierten Ansteuerung mit der Fördervorrichtung (11) über eine Steuervorrichtung gekoppelt ist, um die Untersuchung der Gefäßqualität des Gefäßes (20) in der Inspektionsposition nach der Bearbeitung während einer Haltephase der Fördervorrichtung (11) durchzuführen, wobei die Haltephase durch eine durch die Bearbeitung eines Gefäßes benötigte Zeitdauer vorgegeben ist.

7. Fertigungsanlage nach Anspruch 5 oder 6, wobei die Gefäße Dosen sind, die Bearbeitungsmaschine (10) eine stromaufwärts mit einem Zuführförderband (12) und stromabwärts mit einem Abförderband (13) operativ gekoppelte Einziehmaschine (10) zur Umformung der Dosenkörper, insbesondere zur Umformung einer Dosenöffnung, ist.

8. Inspektionsverfahren zur Untersuchung einer Gefäßqualität nach der Bearbeitung eines Gefäßes (20) in einer Fertigungsanlage zur Fertigung von Gefäßen nach zumindest einem der Ansprüche 5 bis 7,
umfassend die Schritte:
- Anordnen der Inspektionsvorrichtung in Bezug zu dem zu inspizierenden Gefäß (20) in einer Inspektionsposition, dabei Einrichten einer ortsfesten Position des ersten Optikelements (3) zur Bildaufnahme von zumindest einer Ansicht in Richtung einer Gefäßöffnung und
- beweglich in Richtung einer von der Gefäßöffnung abgewandten Seite des zu inspizierenden Gefäßes (20) Lagern des zweiten Optikelements (6, 6') zur Bildaufnahme einer Ansicht der von der Gefäßöffnung abgewandten Seite des zu inspizierenden Gefäßes (20), und operativ Verbinden des ersten, ortsfest positionierten Optikelements (3) und des zweiten, beweglich gelagerten Optikelements (6, 6') mit der Kamera (2), und
- Ausführen von Bildaufnahmen von jeweils einem in der Inspektionsposition befindlichen, fest angeordneten Gefäß (20) in der Bearbeitungsmaschine (10) durch die Inspektionsvorrichtung durch die Kamera (2).

9. Inspektionsverfahren nach Anspruch 8,
umfassend die Schritte:
- koordiniert zu der Fördervorrichtung (11) Ansteuern der Inspektionsvorrichtung durch die Steuervorrichtung und Durchführen der Untersuchung der Gefäßqualität des Gefäßes (20) in der Inspektionsposition während einer Haltephase der Fördervorrichtung (11), wobei die Haltephase durch eine durch die Bearbeitung eines Gefäßes benötigte Zeitdauer vorgegeben ist.

10. Inspektionsverfahren nach einem der Ansprüche 8 oder 9,
wobei das Anordnen der Inspektionsvorrichtung das Verfahren des in Bezug zu der ortsfesten Kamera (2) verfahrbaren Bauteils der Inspektionsvorrichtung (1) in die Bildaufnahmeanordnung des von dem Bauteil umfassten Halterohrs (7) mit dem zweiten optischen Bauelement (6, 6') durch axial-parallel zu der Aufnahmeachse (A-A) in Richtung des zu inspizierenden Gefäßes (20) Bewegen des Halterohrs (7), und
- Aufnehmen des zu inspizierenden Abschnitts des Gefäßes (20) in dem Halterohr (7), umfasst.

11. Inspektionsverfahren nach zumindest einem der Ansprüche 8 bis 10, umfassend den Schritt
- Aufnehmen von Innenbildaufnahmen von dem Gefäß (20), das mit seiner Öffnung in Richtung der Kamera (2) weist, mittels der Endoskopoptik (6').

## Claims

1. An inspection apparatus (1) for examining vessels which are fixedly mounted on a processing machine (10), including a camera (2) which comprises a first optical component (3) and is coupled to an image processing unit, and which is mounted with respect to a vessel (20) to be inspected which is in an inspection position on the processing machine (10),
wherein the inspection apparatus (1) comprises a second movably supported optical element (6, 6'),
and wherein the first optical element (3) and the second, optical element (6, 6') are in operative connection with the camera (2) for recording an image of at least one view in the direction of a vessel opening and at least one view in the direction of a side of the vessel (20) to be inspected facing away from the vessel opening, wherein the second movably supported optical element (6, 6') is arranged in a movable component which includes at least one retaining tube (7), wherein
- the camera (2) is arranged stationary relative to the vessel (20) to be inspected,
**characterised in that**
- the camera (2) with at least one illumination device (5) is surrounded by a jacket tube (4), wherein the jacket tube (4) has a central longitudinal axis, and an outer diameter of the jacket tube (4) is smaller than an opening cross-section of the retaining tube (7), so that the jacket tube (4) may be at least partially accommodated in the retaining tube (7), and
- the component in which the second optical element (6, 6') is arranged is movable in parallel to the central longitudinal axis of the jacket tube (4) relative to the stationary camera.

2. The inspection apparatus (1) according to Claim 1, wherein the jacket tube (4) is made of a metal, metal alloy, plastic, or fiber composite material.

3. The inspection apparatus (1) according to any of the previous claims, wherein the camera (2) with the first optical component (3) points along a recording axis (A-A) in the direction of the vessel (20) which is located in the inspection position, wherein the recording axis (A-A) is aligned with a central longitudinal axis of the vessel (20) to be inspected in the inspection position, and wherein the retaining tube (7) is arranged coaxially to the recording axis (A-A) in an area between the camera (2) and the vessel (20) and axially parallel movable in the direction of the vessel (20), and the opening cross-section of the retaining tube (7) is larger than a maximum outer circumference of a portion of the vessel (20) to be inspected, so that in an image recording arrangement at least the portion of the vessel (20) to be inspected may be accommodated in the retaining tube (7), and for providing the operative connection between the second optical element (6, 6') and the camera, a beam path extends from the illumination device (5) to the portion of the vessel (20) to be inspected, and from there via the second optical component (6, 6') to the first optical component (3) of the camera (2).

4. The inspection apparatus (1) according to any of Claims 1 to 3, wherein the second optical component
- is a mirror (6), in particular a concave curved or a parabolic mirror with a through hole (6''), and/or
- an endoscopic optical system (6'),
wherein the endoscopic optical system (6') is held in the retaining tube (7) by a retaining element (7") in parallel to and centered with respect to the central longitudinal axis of the retaining tube (7), and a first end of the endoscopic optical system (6') faces the camera (2), and a recording area of the camera is adjustable to an end face at the first end of the endoscopic optical system (6') by means of the first optical component (3), and wherein the vessel in the inspection position with its opening faces a second end of the endoscopic optical system (6').

5. A production plant for producing vessels, including at least one processing machine (10) for processing the vessels which are fixedly mounted in the processing machine (10) on a moving conveying device (11) for moving the vessels along multiple processing stations of the processing machine (10), and an inspection apparatus according to at least one of Claims 1 to 4 for examining the quality of a vessel after processing.

6. The production plant according to Claim 5, wherein the inspection apparatus includes the second holding device (4) in which the camera (2) with the first optical component (3) and the at least one illumination device (5) are fastened and is positioned in the processing machine (10) relative to a vessel (20) to be inspected which is in an inspection position, in such a manner that the camera (2) with the first optical component (3) points along the recording axis (A-A) in the direction of the vessel (20) to be inspected, wherein the recording axis (A-A) is aligned with a central longitudinal axis of the vessel (20) in the inspection position, wherein the inspection apparatus is coupled to the processing machine (10) with the conveying device (11) via a control device for the coordinated control in order to examine the quality of the vessel (20) in the inspection position during an holding phase of the conveying device (11) after processing, the holding phase being given by a required time period for a vessel to be processed.

7. The production plant according to Claim 5 or 6, wherein the vessels are cans and the processing machine (10) is a necking machine (10) for shaping the can bodies, in particular for shaping a can opening, which upstream is operatively coupled with a feed conveyor belt (12) and downstream with a discharge belt (13).

8. An inspection method for examining the quality of a vessel after processing of a vessel (20) in a production plant for producing vessels according to any of Claims 5 to 7, comprising the steps:
- arranging the inspection apparatus relative to the vessel (20) to be inspected in an inspection position, thereby setting a stationary position of the first optical element (3) for recording the image of at least one view in the direction of a vessel opening, and
- movably supporting the second optical elements (6, 6') in the direction of a side of the vessel (20) to be inspected facing away from the vessel opening for recording the image of a view of the side of the vessel (20) to be inspected facing away from the vessel opening, and operatively connecting the first stationary positioned optical element (3) and the second movably supported optical element (6, 6') with the camera (2), and
- carrying out image recording by means of the camera (2) of a vessel (20) which in each case is in the inspection position and is fixedly mounted in the processing machine (10) by the inspection apparatus.

9. The inspection method according to Claim 8, comprising the steps:
- coordinated controlling the inspection apparatus with the conveying device (11) and carrying out the examination of the quality of the vessel in the inspection position during an holding phase of the conveying device (11), wherein the holding phase is given by a required time period for processing a vessel.

10. The inspection method according to any of Claims 8 or 9,
wherein the arrangement of the inspection apparatus comprises moving the component of the inspection apparatus which is movable relative to the stationary camera (2) into the image recording arrangement of the retaining tube (7) which is surrounded by the component with the second optical component (6, 6') by moving the retaining tube (7) axially parallel relative to the recording axis (A-A) in the direction of the vessel (20) to be inspected, and
- accommodating the portion of the vessel (20) to be inspected in the retaining tube (7).

11. The inspection method according to any of Claims 8 to 10, comprising the step:
- recording interior images of the vessel (20) whose opening faces toward the camera (2) by means of the endoscopic optical system (6').

## Revendications

1. Dispositif d'inspection (1) pour l'examen de récipients disposés de manière fixe sur une machine d'usinage (10), comprenant une caméra (2) qui présente un premier élément optique (3) et est couplée à une unité de traitement d'image et qui est disposée par rapport à un récipient (20) à inspecter qui se trouve dans une position d'inspection sur la machine d'usinage (10),
dans lequel le dispositif d'inspection (1) comprend un deuxième élément optique (6, 6') monté de manière mobile,
et dans lequel le premier élément optique (3) et le deuxième élément optique (6, 6') sont en liaison fonctionnelle avec la caméra (2) pour prendre une image d'au moins une vue dans la direction d'une ouverture de récipient et d'au moins une vue dans la direction d'un côté du récipient (20) à inspecter qui est opposé à l'ouverture de récipient,
dans lequel le deuxième élément optique (6, 6') monté de manière mobile est disposé dans un composant déplaçable qui comprend au moins un tube de maintien (7),
dans lequel
- la caméra (2) est disposée en position fixe par rapport au récipient (20) à inspecter,
**caractérisé en ce que**
- la caméra (2) avec au moins un dispositif d'éclairage (5) est entourée d'un tube enveloppe (4), le tube enveloppe (4) ayant un axe longitudinal central et un diamètre extérieur du tube enveloppe (4) étant inférieur à une section d'ouverture du tube de maintien (7), de telle sorte que le tube enveloppe (4) peut être reçu au moins partiellement dans le tube de maintien (7), et
- le composant dans lequel est disposé le deuxième élément optique (6, 6'), est déplaçable parallèlement à l'axe longitudinal du tube enveloppe (4) par rapport à la caméra (2) en position fixe.

2. Dispositif d'inspection (1) selon la revendication 1, dans lequel le tube enveloppe (4) est constitué d'un métal, d'un alliage métallique, d'une matière plastique ou d'un matériau composite à base de fibres.

3. Dispositif d'inspection (1) selon l'une des revendications précédentes,
dans lequel la caméra (2) avec le premier élément optique (3) est orientée le long d'un axe de prise d'image (A-A) dans la direction du récipient (20) qui se trouve dans la position d'inspection, dans lequel, dans la position d'inspection, l'axe de prise d'image (A-A) est aligné avec un axe longitudinal central du récipient (20) à inspecter, et dans lequel le tube de maintien (7) est disposé coaxialement à l'axe de prise d'image (A-A) dans une zone située entre la caméra (2) et le récipient (20) et est mobile parallèlement à l'axe dans la direction du récipient (20) et la section d'ouverture du tube de maintien (7) est supérieure à un diamètre extérieur maximal d'une partie du récipient (20) à inspecter, de telle sorte que, dans un agencement de prise d'image, au moins la partie à inspecter du récipient (20) peut être reçue dans le tube de maintien (7) et, afin de fournir la liaison fonctionnelle entre le deuxième élément optique (6, 6') et la caméra, un trajet de faisceau va du dispositif d'éclairage (5) à la partie à inspecter du récipient (20) et, de là, par l'intermédiaire du deuxième élément optique (6, 6'), au premier élément optique (3) de la caméra (2).

4. Dispositif d'inspection (1) selon au moins l'une des revendications 1 à 3, dans lequel le deuxième élément optique est
- un miroir (6), en particulier un miroir à courbure concave ou un miroir parabolique, avec une ouverture de passage (6") et/ou
- une optique d'endoscope (6'),
dans lequel l'optique d'endoscope (6') est maintenue par un support (7") dans le tube de maintien (7) de manière parallèle et centrée par rapport à un axe longitudinal central du tube de maintien (7) et une première extrémité de l'optique d'endoscope (6') est dirigée vers la caméra (2), et une zone de prise d'image de la caméra (2) est réglable au moyen du premier élément optique (3) sur une face frontale à la première extrémité de l'optique d'endoscope (6') et dans lequel le récipient se trouvant dans la position d'inspection est dirigé avec son ouverture de récipient vers une deuxième extrémité de l'optique d'endoscope (6').

5. Installation de fabrication pour la fabrication de récipients, comprenant au moins une machine d'usinage (10) pour l'usinage des récipients qui sont disposés de manière fixe dans la machine d'usinage (10) sur un dispositif de transport mobile (11) pour déplacer les récipients le long de plusieurs postes d'usinage de la machine d'usinage (10), et un dispositif d'inspection selon au moins l'une des revendications 1 à 4, pour examiner une qualité de récipient après l'usinage.

6. Installation de fabrication selon la revendication 5, dans laquelle le dispositif d'inspection comprend le deuxième dispositif de maintien (4) dans lequel la caméra (2) avec le premier élément optique (3) et ledit au moins un dispositif d'éclairage (5) est fixée et est positionnée dans la machine d'usinage (10) par rapport à un récipient (20) à inspecter qui se trouve dans une position d'inspection, de telle sorte que la caméra (2) avec le premier élément optique (3) est dirigée le long de l'axe de prise d'image (A-A) dans la direction du récipient (20) à inspecter, dans laquelle l'axe de prise d'image (A-A) est aligné avec un axe longitudinal central du récipient (20) dans la position d'inspection, dans laquelle le dispositif d'inspection est couplé à la machine d'usinage (10) pour la commande coordonnée avec le dispositif de transport (11) au moyen d'un dispositif de commande afin d'effectuer l'examen de la qualité de récipient du récipient (20) dans la position d'inspection après l'usinage pendant une phase de maintien du dispositif de transport (11), dans laquelle la phase de maintien est prédéfinie par une durée nécessaire pour l'usinage d'un récipient.

7. Installation de fabrication selon la revendication 5 ou 6, dans laquelle les récipients sont des canettes, la machine d'usinage (10) est une machine d'emboutissage (10) couplée fonctionnellement en amont à une bande transporteuse d'amenée (12) et en aval à une bande transporteuse d'évacuation (13) pour former les corps de canette, en particulier pour former une ouverture de canette.

8. Procédé d'inspection pour examiner une qualité de récipient après l'usinage d'un récipient (20) dans une installation de fabrication de récipients selon au moins l'une des revendications 5 à 7,
comprenant les étapes consistant à :
- disposer le dispositif d'inspection par rapport au récipient (20) à inspecter dans une position d'inspection, en établissant une position fixe du premier élément optique (3) pour prendre une image d'au moins une vue dans la direction d'une ouverture de récipient et
- monter le deuxième élément optique (6, 6') de manière mobile dans la direction d'un côté du récipient (20) à inspecter qui est opposé à l'ouverture du récipient pour prendre une image d'une vue du côté du récipient (20) à inspecter qui est opposé à l'ouverture de récipient, et relier fonctionnellement le premier élément optique (3) positionné de manière fixe et le deuxième élément optique (6, 6') monté de manière mobile à la caméra (2), et
- réaliser des prises d'image respectivement d'un récipient (20) disposé de manière fixe et se trouvant dans la position d'inspection dans la machine d'usinage (10) par le dispositif d'inspection au moyen de la caméra (2).

9. Procédé d'inspection selon la revendication 8,
comprenant les étapes consistant à :
- commander, de manière coordonnée avec le dispositif de transport (11), le dispositif d'inspection par le dispositif de commande et effectuer l'examen de la qualité de récipient du récipient (20) dans la position d'inspection pendant une phase de maintien du dispositif de transport (11), la phase de maintien étant prédéfinie par une durée nécessaire pour l'usinage d'un récipient.

10. Procédé d'inspection selon l'une des revendications 8 ou 9,
dans lequel l'étape consistant à disposer le dispositif d'inspection comprend les étapes consistant à déplacer le composant du dispositif d'inspection (1) déplaçable par rapport à la caméra (2) en position fixe dans l'agencement de prise d'image du tube de maintien (7) compris par le composant présentant le deuxième élément optique (6, 6') en déplaçant le tube de maintien (7) parallèlement à l'axe de prise d'image (A-A) dans la direction du récipient (20) à inspecter, et à recevoir la partie à inspecter du récipient (20) dans le tube de maintien (7).

11. Procédé d'inspection selon au moins l'une des revendications 8 à 10, comprenant l'étape consistant à prendre des images intérieures du récipient (20), dont l'ouverture est dirigée vers la caméra (2), au moyen de l'optique d'endoscope (6').
